# EUROPEAN PATENT APPLICATION

(11) **EP 4 502 262 A1**
(43) Date of publication of application: **05.02.2025**
(21) Application number: 22933155.8
(22) Date of filing: 09.12.2022
(51) Int. Cl.: D06B 23/20, D06B 23/22, D06B 9/02

(54) **METHOD FOR IMPROVING SOLUBILITY AND DISSOLUTION RATE OF DYE CHEMICAL IN SUPERCRITICAL CARBON DIOXIDE FLUID**

(30) Priority: 25.03.2022 CN 202210307175
(71) Applicant: Donghua University, Shanghai 201620 (CN); Qingdao Jifa Group Co., Ltd, Jimo Qingdao, Shandong 266200 (CN)
(72) Inventor: WU, Wei, Shanghai 201620 (CN); MAO, Zhiping, Shanghai 201620 (CN); GE, Huaifu, Shanghai 201620 (CN); XU, Hong, Shanghai 201620 (CN); ZHONG, Yi, Shanghai 201620 (CN); WANG, Jian, Qingdao Shandong 266200 (CN); YANG, Weidong, Qingdao Shandong 266200 (CN); WAN, Gang, Qingdao Shandong 266200 (CN); GUO, Kun, Qingdao Shandong 266200 (CN); LIN, Dapeng, Qingdao Shandong 266200 (CN); WANG, Dawei, Qingdao Shandong 266200 (CN)
(74) Representative: Franks & Co Limited
(86) International application number: PCT/CN2022/138006
(87) International publication number: WO 2023/179105

(57) **Abstract**

A method for improving a solubility and a dissolution rate of dyestuffs in supercritical carbon dioxide fluid is provided, by first increasing the temperature to a target temperature above the melting point of the dyestuff to melt the dyestuff, and then mixing the supercritical carbon dioxide fluid in flow with the molten dyestuff at a certain mass ratio, afterwards, lowering the supercritical carbon dioxide fluid with the dyestuff dissolved to the initial temperature, repeating mixing and cooling processes in a cycle and maintaining for a certain time, and all temperature conditions remaining the same as before during the cycle repetition; wherein the dyestuff is a dye and/or a functional auxiliary; the initial temperature is lower than the target temperature; the pressure of the supercritical carbon dioxide fluid remains consistent. The invention improves the solubility and dissolution rate of dyestuffs in supercritical carbon dioxide, without adding other cosolvents, will not cause harm to the human body, and does not need to consider the separation and removal of cosolvents.

## Description

### TECHNICAL FIELD

The present invention belongs to the technical field of dyeing and finishing, and more particularly, relates to a method for improving a solubility and a dissolution rate of dyestuffs in supercritical carbon dioxide fluid.

### BACKGROUND

Weakly polar dyestuffs have low solubility and slow dissolution rate in supercritical carbon dioxide fluid, and in the supercritical carbon dioxide fluid dyeing and finishing process, supercritical carbon dioxide fluid needs to be continuously delivered by circulation pumps to dissolve the amount of dyeing and chemical materials that meet the requirements of dyeing chromaticity or finishing properties, which seriously affects the productivity of supercritical carbon dioxide fluid dyeing and finishing processing, and some high melting point dyeing and chemical materials have very low solubility in supercritical carbon dioxide fluids, resulting in their low utilization rate, which also seriously restricts the development of supercritical carbon dioxide fluid dyeing and finishing technology.

At present, the method to improve the solubility and dissolution rate of dyestuffs in supercritical carbon dioxide fluid is mainly to add cosolvents in supercritical carbon dioxide fluid, which are organic polar solvents with low boiling point and are vapors under the dyeing and finishing process of supercritical carbon dioxide fluid, and the vapors have large toxicity and will cause significant harm to the human body if leaked during the production process. There are also difficulties in the separation and removal of the solvent after the dyeing and finishing process.

Therefore, it is of great significance to study a simple method that does not require the use of cosolvents to improve the solubility and the dissolution rate of dyestuffs in supercritical carbon dioxide fluids.

### SUMMARY

In order to solve the problems in the prior art, the present invention provides a method for improving the solubility and the dissolution rate of dyestuffs in supercritical carbon dioxide fluid.

To this end, the technical schemes of the invention are as follows:
A method for improving a solubility and a dissolution rate of dyestuffs in supercritical carbon dioxide fluid, first increasing a temperature to a target temperature above a melting point of a dyestuff to melt the dyestuff, mixing the supercritical carbon dioxide fluid in flow with the molten dyestuff at a certain mass ratio, and then lowering the supercritical carbon dioxide fluid with the dyestuff dissolved to an initial temperature, repeating mixing and cooling processes in a cycle and maintaining for a certain time, and all temperature conditions remaining the same as before during the cycle repetition;
wherein the dyestuff is a dye and/or a functional auxiliary;
wherein the initial temperature is lower than the target temperature;
wherein a pressure of the supercritical carbon dioxide fluid remains consistent.

The term "consistent" means that the pressure of the flowing supercritical carbon dioxide fluid with an initial temperature, the pressure of the mixed supercritical carbon dioxide fluid, and the supercritical carbon dioxide fluid with dyestuffs dissolved after dropping to initial temperature, these three pressure values are the same.

The following preferred technology program is presented to give a detailed description for this invention:

The said method for improving a solubility and a dissolution rate of dyestuffs in supercritical carbon dioxide fluid, assuming the melting point of the dyestuff is A °C, and a value range of A is 60-230.

The said method for improving a solubility and a dissolution rate of dyestuffs in supercritical carbon dioxide fluid, wherein the target temperature is A °C - (A+ 20) °C.

The said method for improving a solubility and a dissolution rate of dyestuffs in supercritical carbon dioxide fluid, wherein the initial temperature of the supercritical carbon dioxide fluid is B °C, and a value range of B is 31.2< B< (A-20). The critical temperature of the supercritical carbon dioxide fluid is 31.2 °C.

The said method for improving a solubility and a dissolution rate of dyestuffs in supercritical carbon dioxide fluid, wherein the mass ratio of the dyestuff and the supercritical carbon dioxide fluid is 5×10⁻⁵-5×10⁻³ g·g⁻¹.

The said method for improving a solubility and a dissolution rate of dyestuffs in supercritical carbon dioxide fluid, wherein the rate of increasing the temperature is 1-20 °C/min

The said method for improving a solubility and a dissolution rate of dyestuffs in supercritical carbon dioxide fluid, wherein the flow rate of the supercritical carbon dioxide fluid is 1-120 ton/hour.

The said method for improving a solubility and a dissolution rate of dyestuffs in supercritical carbon dioxide fluid, wherein the pressure of the supercritical carbon dioxide fluid is greater than 10 MPa; the critical pressure of the supercritical carbon dioxide is 7.38 MPa; when the temperature is too high, a certain pressure must be ensured, so that firstly the supercritical state exists, and secondly the density of the supercritical carbon dioxide is greater, with better solubility; wherein the said pressure condition of the supercritical carbon dioxide is achieved by using a pressurized pump.

The said method for improving a solubility and a dissolution rate of dyestuffs in supercritical carbon dioxide fluid, wherein the certain time for maintaining is 5 min-2 h.

The said method for improving a solubility and a dissolution rate of dyestuffs in supercritical carbon dioxide fluid, wherein the rate of cooling the temperature is 1-20 °C/min; if the cooling rate is too slow, it will take longer time and the dissolution efficiency of the entire dyestuff will decrease; if the cooling rate is too fast, the dye originally dissolved at high temperature will be unstable and precipitate out.

The said method for improving a solubility and a dissolution rate of dyestuffs in supercritical carbon dioxide fluid, wherein the functional auxiliary agent is an antioxidant or a flame retardant finishing agent; wherein the antioxidant is a polyphenol structure antioxidant such as a ferulic acid and a dopamine; wherein the flame retardant finishing agent is Klein 5060 flame retardant finishing agent and DOPO flame retardant finishing agent.

The said method for improving a solubility and a dissolution rate of dyestuffs in supercritical carbon dioxide fluid, wherein the dye is a non-ionic dye.

The said method for improving a solubility and a dissolution rate of dyestuffs in supercritical carbon dioxide fluid, wherein the non-ionic dye is more than one selected from the group consisting of a disperse dye, a disperse reactive dye, a solvent dye, a non-ionic food dye, an organic pigment and a natural dye.

The mechanism of the present invention is as follows:

When the supercritical carbon dioxide fluid at the initial temperature is mixed with the molten dyestuff, because the initial temperature is lower than the target temperature (i.e., the temperature of the dyestuff), the mixing process will definitely heat up the critical carbon dioxide fluid, and at a certain pressure, the density of the supercritical carbon dioxide fluid is significantly affected by the change of temperature, so the temperature rise caused by the mixing process will reduce the density of carbon dioxide and the solubility of dyestuff by the supercritical carbon dioxide. However, the present invention raises the target temperature above the melting point of the dyestuff, which makes the dyestuff melt on the one hand, and when the molten dyestuff is mixed with the supercritical carbon dioxide fluid, the contact area between the two increases, which can improve the dissolution rate of the dyestuff in the supercritical carbon dioxide fluid, on the other hand, the melting process destroys the crystal structure of the dyestuff and reduces the interaction force between molecules inside the dyestuff, which makes the dyestuff easier to dissolve in the supercritical carbon dioxide fluid, and then the solubility of the dyestuff which is not easily dissolved in the supercritical carbon dioxide fluid under this initial temperature condition is improved; further, the temperature of the system is then lowered from the temperature after mixing to the initial temperature of the supercritical carbon dioxide fluid, and the lowering of the temperature causes the density of the supercritical carbon dioxide fluid to increase, the solubility of the supercritical carbon dioxide to increase, and the dye that would condense and precipitate due to the lowering of the temperature to below the melting point of the dye does not condense and precipitate due to the increased solubility of the supercritical carbon dioxide fluid, and remains dissolved in the fluid. After this series of cycles, it is possible to increase the solubility and dissolution rate in the supercritical carbon dioxide fluid of the dyestuff that have low solubility and slow dissolution rate under the initial temperature conditions.

Benefits:
(1) The method for improving a solubility and a dissolution rate of dyestuffs in supercritical carbon dioxide fluid of the invention, by pre-melting the dyestuffs and dismantling their internal intermolecular interactions, the contact area between the dyeing material and supercritical carbon dioxide fluid is improved; due to the property that the solubility of the supercritical carbon dioxide fluid increases as the temperature decreases, by only changing the working conditions, the method improves the solubility and dissolution rate of dyestuffs in supercritical carbon dioxide, without adding other cosolvents, will not cause harm to the human body, and does not need to consider the separation and removal of cosolvents;
(2) The method for improving a solubility and a dissolution rate of dyestuffs in supercritical carbon dioxide fluid of the invention, is simple and has a wide range of applications.

### DETAILED DESCRIPTION OF THE EMBODIMENTS

Based on above mentioned method, the following embodiments are carried out for further demonstration in the present invention. It is to be understood that these embodiments are only intended to illustrate the invention and are not intended to limit the scope of the invention. In addition, it should be understood that after reading the contents described in the present invention, those technical personnel in this field can make various changes or modifications to the invention, and these equivalent forms also fall within the scope of the claims attached to the application.

Test methods for solubility and dissolution rate:

The infrared absorption or Raman or UV-Vis absorption spectra of a known amount of the dyeing material in supercritical CO₂ fluid is first tested using in situ infrared or Raman or UV-Vis absorption spectroscopy to determine a linear relationship between the concentration of the dyeing material in supercritical CO₂ fluid and the intensity of the characteristic peak of the spectrum; where the concentration of the dyeing material in supercritical CO₂ fluid is the amount of substance of the dissolved dyeing material divided by the amount of supercritical CO₂ the amount of substance of the fluid.

Then, in testing the solubility and dissolution rate, the time for the dyeing material to reach the dissolution equilibrium state is set to t1, starting from the time when the dyeing material is mixed with the supercritical CO₂ fluid, and said time for the dyeing material to reach the dissolution equilibrium state is defined as the state in which the intensity of the characteristic peak of the dyeing material does not change within 30 min;

The solubility is calculated by calculating the concentration of the dyed material in the supercritical CO₂ fluid corresponding to the characteristic peak at the moment t1, based on the linear relationship between the concentration and the intensity of the spectral characteristic peak, which is the solubility of the dyed material at that temperature and pressure condition;

The dissolution rate is calculated by dividing the stated solubility by t1 to obtain the dissolution rate.

The sources of materials in Examples 1-22 of the present invention are:

| Example | Material | Material source |
|---|---|---|
| Example 1 | Disperse Yellow 163 | Zhejiang Shangyu Runtu Co., Ltd. |
| Example 2 | Disperse Blue 60 | Zhejiang Shangyu Runtu Co., Ltd. |
| Example 3 | Disperse Yellow 42 | Zhejiang Shaoxing Wantong Dyeing and Chemical Co., Ltd. |
| Example 4 | Disperse Blue 354 | Zhejiang Shangyu Longsheng Group Co., Ltd. |
| Example 5 | Azo-vinyl Sulfone Reactive Disperse Orange Dye | The structural formula is: |
| | | 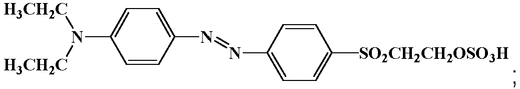 |
| | | Preparation method reference: Solubility and data correlation of a reactive disperse dye in a quaternary system of supercritical carbon dioxide with mixed cosolvents; |
| Example 6 | Azo-s-triazine Type Reactive Disperse Red Dye | The structural formula is: |
| | | 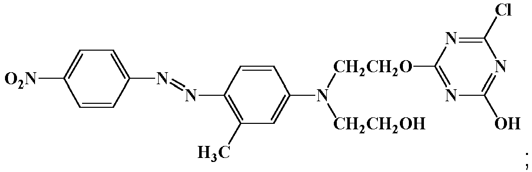 |
| | | Preparation method reference: Solubility of a reactive disperse dye insupercritical carbon dioxide; |
| Example 7 | Solvent Yellow 2 | Jiangsu Changzhou Yabang Group Dyestuff Co., Ltd. |
| Example 8 | Solvent Red 24 | Jiangsu Changzhou Yabang Group Dyestuff Co., Ltd. |
| Example 9 | Solvent Blue 63 | Jiangsu Changzhou Yabang Group Dyestuff Co., Ltd. |
| Example 10 | Food Yellow 10 | Shanghai Dyestuff Research Institute |
| Example 11 | Food Orange 3 | Shanghai Dyestuff Research Institute |
| Example 12 | Pigment yellow 5 | Shandong Jining Sunshine Pigment Co., Ltd. |
| Example 13 | Pigment Red 50 | Zhejiang Jiaxing Kelong Chemical Co., Ltd. |
| Example 14 | Pigment Red 147 | Zhejiang Jiaxing Kelong Chemical Co., Ltd. |
| Example 15 | Curcumin | Beijing Solebao Technology Co., Ltd. |
| Example 16 | Cochineal | Tianjin Alta Technology Co., Ltd. |
| Example 17 | Rutin | Beijing Solebao Technology Co., Ltd. |
| Example 18 | Ferulic Acid | China Institute of Metrology |
| Example 19 | Dopamine | APExBIO Corporation of the United States |
| Example 20 | Klein 5060 Flame Retardant Finishing Agent | Dalian Xingyuan Chemical Co., Ltd. |
| Example 21 | DOPO Flame Retardant Finishing Agent | Dalian Xingyuan Chemical Co., Ltd. |

### Example 1

A method for improving a solubility and a dissolution rate of dyestuffs in supercritical carbon dioxide fluid, using thermal oil heating and a heating rate of 20 °C/min, to increase the temperature of the dyestuff (Disperse Yellow 163) with a melting point of 182 °C to the target temperature above the melting point (i.e. 190 °C), the dyestuff is melted. According to the mass ratio of the dyestuff and CO₂, the ratio is 3×10⁻⁴ g·g⁻¹, mix the flowing supercritical carbon dioxide fluid with an initial temperature of 130 °C and the molten dye, and then use natural cooling to cool the supercritical carbon dioxide fluid with the dye dissolved at 1 °C/min. The cooling rate of min is reduced to the initial temperature (i.e. 130 °C), and the mixing and cooling process is repeated in a cycle. This process is maintained for 30 minutes. During the cycle repetition process, all temperature conditions remain the same as before; in the supercritical carbon dioxide fluid and dyestuffs during the entire mixing process, the pressure of the supercritical carbon dioxide fluid is always maintained at 20 MPa, and the flow rate of the supercritical carbon dioxide fluid is 20 tons/hour;

Test the solubility and dissolution rate of the dyestuff in the supercritical carbon dioxide fluid under the process parameter, and the test results are shown in Table 1.

### Comparison 1

A method for dissolving dyestuffs in supercritical carbon dioxide fluid. The specific process is basically the same as in Example 1. The only difference is that the supercritical carbon dioxide fluid with an initial temperature of 130 °C in the flow is directly mixed with the Dispersed Yellow 163 material under normal temperature conditions; test the solubility and dissolution rate of the dyestuff in the supercritical carbon dioxide fluid under the process parameter, and the test results are shown in Table 1.

### Comparison 2

A method for dissolving dyestuffs in supercritical carbon dioxide fluid. The specific process is basically the same as in Example 1. The only difference is that the supercritical carbon dioxide fluid with an initial temperature in the flow of 130 °C is replaced with a supercritical carbon dioxide fluid with an initial temperature in the flow of 182 °C (that is, when the temperature of the supercritical carbon dioxide fluid is mixed with Dispersed Yellow 163, the two temperatures are the same); test the solubility and dissolution rate of the dyestuff in the supercritical carbon dioxide fluid under the process parameter, and the test results are shown in Table 1.

### Comparison 3

A method for dissolving dyestuffs in supercritical carbon dioxide fluid. The specific process is basically the same as in Example 1. The only difference is that the pressure of the supercritical carbon dioxide fluid with an initial temperature in the flow is 20 MPa. After mixing with the dye The pressure of the supercritical carbon dioxide fluid is adjusted to 15MPa, and the pressure of the supercritical carbon dioxide fluid with the dye dissolved in it drops to the initial temperature to 20MPa; test the solubility and dissolution rate of the dyestuff in the supercritical carbon dioxide fluid under the process parameter, and the test results are shown in Table 1.

### Comparison 4

A method for dissolving dyestuffs in supercritical carbon dioxide fluid. The specific process is basically the same as in Example 1. The only difference is that the pressure of the supercritical carbon dioxide fluid with an initial temperature in the flow is 20 MPa. After mixing with the dye The pressure of the supercritical carbon dioxide fluid remains at 20MPa, and the pressure of the supercritical carbon dioxide fluid with dissolved dyestuffs is adjusted to 15 MPa after it drops to the initial temperature; test the solubility and dissolution rate of the dyestuff in the supercritical carbon dioxide fluid under the process parameter, and the test results are shown in Table 1.

### Example 2

A method for improving a solubility and a dissolution rate of dyestuffs in supercritical carbon dioxide fluid, using electric heating and a heating rate of 15 °C/min, to raise the temperature of the dyestuff (Disperse Blue 60) with a melting point of 191 °C to the target temperature above the melting point (i.e. 205 °C) makes the dyestuff melt. According to the mass ratio of the dyestuff to CO₂, the ratio is 6×10⁻⁴ g·g⁻¹, mix the flowing supercritical carbon dioxide fluid with an initial temperature of 135 °C with the molten dye, and then cool the supercritical carbon dioxide fluid with the dye dissolved at 3 °C/min by air cooling. The cooling rate to the initial temperature (i.e. 135 °C), and the mixing and cooling process is repeated in a cycle. This process is maintained for 60 minutes. During the cycle repetition process, all temperature conditions remain the same as before; in the supercritical carbon dioxide fluid and dyeing during the entire process of material mixing, the pressure of the supercritical carbon dioxide fluid is always maintained at 24 MPa, and the flow rate of the supercritical carbon dioxide fluid is 40 tons/hour;

Test the solubility and dissolution rate of the dyestuff in the supercritical carbon dioxide fluid under the process parameter, and the test results are shown in Table 1.

### Example 3

A method for improving a solubility and a dissolution rate of dyestuffs in supercritical carbon dioxide fluid, using infrared heating and a heating rate of 12 °C/min, to raise the temperature of the dyestuff (Disperse Yellow 42) with a melting point of 156 °C to the target temperature above the melting point (i.e. 170 °C) makes the dyestuff melt. According to the mass ratio of the dyestuff to CO₂, the ratio is 7.5×10⁻⁴ g·g⁻¹, mix the flowing supercritical carbon dioxide fluid with an initial temperature of 125 °C with the molten dye, and then cool the supercritical carbon dioxide fluid with the dye dissolved in water at 5 °C/min. The cooling rate of min is reduced to the initial temperature (i.e. 125 °C), and the mixing and cooling process is repeated in a cycle. This process is maintained for 75 minutes. During the cycle repetition process, all temperature conditions remain the same as before; when the supercritical carbon dioxide fluid is mixed with the dyestuff during the entire process, the pressure of the supercritical carbon dioxide fluid is always maintained at 27 MPa, and the flow rate of the supercritical carbon dioxide fluid is 50 tons /hour;

Test the solubility and dissolution rate of the dyestuff in the supercritical carbon dioxide fluid under the process parameter, and the test results are shown in Table 1.

### Example 4

A method for improving a solubility and a dissolution rate of dyestuffs in supercritical carbon dioxide fluid, using microwave heating and a heating rate of 16 °C/min, to raise the temperature of the dyestuff (Disperse Blue 354) with a melting point of 134 °C to the target temperature above the melting point (i.e. 140 °C) makes the dyestuff melt. According to the mass ratio of the dyestuff to CO₂, the ratio is 1.5×10⁻³ g·g⁻¹, mix the flowing supercritical carbon dioxide fluid with an initial temperature of 100 °C and the molten dye, and then cool the supercritical carbon dioxide fluid with the dye dissolved in water at 4 °C/min. The cooling rate is reduced to the initial temperature (i.e. 100 °C), and the mixing and cooling process is repeated in a cycle. This process is maintained for 20 minutes. During the cycle repetition process, all temperature conditions remain the same as before; when the supercritical carbon dioxide fluid is mixed with the dyestuff during the entire process, the pressure of the supercritical carbon dioxide fluid is always maintained at 25 MPa, and the flow rate of the supercritical carbon dioxide fluid is 100 tons/hour;

Test the solubility and dissolution rate of the dyestuff in the supercritical carbon dioxide fluid under the process parameter, and the test results are shown in Table 1.

### Example 5

A method for improving a solubility and a dissolution rate of dyestuffs in supercritical carbon dioxide fluid, using nitrogen heating and a heating rate of 15 °C/min, to convert dyestuffs with a melting point of 143 °C (Azo-vinylsulfone Type Reactive Disperse Orange Dye) raise the temperature to a target temperature above the melting point (i.e. 150 °C) to melt the dyestuff. According to the mass ratio of the dyestuff and CO₂, the ratio is 1×10⁻³ g.g-1, mix the flowing supercritical carbon dioxide fluid with an initial temperature of 110 °C and the molten dye, and then cool the supercritical carbon dioxide fluid with the dye dissolved at 20 °C/min by cooling it with liquid nitrogen. The cooling rate to the initial temperature (i.e. 110 °C), and the mixing and cooling process is repeated in a cycle. This process is maintained for 15 minutes. During the cycle repetition process, all temperature conditions remain the same as before; in the supercritical carbon dioxide fluid and dyestuffs during the entire mixing process, the pressure of the supercritical carbon dioxide fluid is always maintained at 20 MPa, and the flow rate of the supercritical carbon dioxide fluid is 120 tons/hour;

Test the solubility and dissolution rate of the dyestuff in the supercritical carbon dioxide fluid under the process parameter, and the test results are shown in Table 1.

### Example 6

A method for improving a solubility and a dissolution rate of dyestuffs in supercritical carbon dioxide fluid, using infrared heating and a heating rate of 12 °C/min, to melt the dyestuff (Azo-s-triazine Type Reactive Disperse Red Dye) with a melting point of 128 °Craise the temperature to a target temperature above the melting point (i.e. 135 °C) to melt the dyestuff. According to the mass ratio of the dyestuff to CO₂, the ratio is 6×10⁻⁴ g·g⁻¹, mix the flowing supercritical carbon dioxide fluid with an initial temperature of 105 °C with the molten dye, and then cool the supercritical carbon dioxide fluid with the dye dissolved at 10 °C/min by air cooling. The cooling rate to the initial temperature (i.e. 105 °C), and the mixing and cooling process is repeated in a cycle. This process is maintained for 35 minutes. During the cycle repetition process, all temperature conditions remain the same as before; in the supercritical carbon dioxide fluid and dyestuffs during the entire mixing process, the pressure of the supercritical carbon dioxide fluid is always maintained at 23 MPa, and the flow rate of the supercritical carbon dioxide fluid is 90 tons/hour;

Test the solubility and dissolution rate of the dyestuff in the supercritical carbon dioxide fluid under the process parameter, and the test results are shown in Table 1.

### Example 7

A method for improving a solubility and a dissolution rate of dyestuffs in supercritical carbon dioxide fluid, using electric heating and a heating rate of 16 °C/min, to raise the temperature of the dyestuff (Solvent Yellow 2) with a melting point of 117 °C to the target temperature above the melting point (i.e. 125 °C) makes the dyestuff melt. According to the mass ratio of the dyestuff to CO₂, the ratio is 3×10⁻³ g.g-1, after mixing the flowing supercritical carbon dioxide fluid with an initial temperature of 80 °C and the molten dye , the supercritical carbon dioxide fluid with the dye dissolved in it is cooled by water cooling at 6 °C/min cooling rate to the initial temperature (i.e. 80 °C), and the mixing and cooling process is repeated in a cycle. This process is maintained for 5 minutes. During the cycle repetition process, all temperature conditions remain the same as before; in the supercritical carbon dioxide fluid and dyestuffs during the entire mixing process, the pressure of the supercritical carbon dioxide fluid is always maintained at 18 MPa, and the flow rate of the supercritical carbon dioxide fluid is 110 tons/hour;

Test the solubility and dissolution rate of the dyestuff in the supercritical carbon dioxide fluid under the process parameter, and the test results are shown in Table 1.

### Example 8

A method for improving a solubility and a dissolution rate of dyestuffs in supercritical carbon dioxide fluid, using nitrogen heating and a heating rate of 20 °C/min, to raise the temperature of the dyestuff (Solvent Red 24) with a melting point of 184 °C to the target temperature above the melting point (i.e. 190 °C) makes the dyestuff melt. According to the mass ratio of the dyestuff to CO₂, the ratio is 8×10⁻⁴ g.g-1, after mixing the flowing supercritical carbon dioxide fluid with an initial temperature of 135 °C and the molten dye, the supercritical carbon dioxide fluid with the dye dissolved in it is naturally cooled to 2 °C/min cooling rate to the initial temperature (i.e. 135 °C), and the mixing and cooling process is repeated in a cycle. This process is maintained for 15 minutes. During the cycle repetition process, all temperature conditions remain the same as before; in the supercritical carbon dioxide fluid and dyestuffs during the entire mixing process, the pressure of the supercritical carbon dioxide fluid is always maintained at 25 MPa, and the flow rate of the supercritical carbon dioxide fluid is 85 tons/hour;

Test the solubility and dissolution rate of the dyestuff in the supercritical carbon dioxide fluid under the process parameter, and the test results are shown in Table 1.

### Example 9

A method for improving a solubility and a dissolution rate of dyestuffs in supercritical carbon dioxide fluid, using thermal oil heating and a heating rate of 15 °C/min, to increase the temperature of the dyestuff (Solvent Blue 63) with a melting point of 118 °C to the target temperature above the melting point (i.e. 120 °C), the dyestuff is melted. According to the mass ratio of the dyestuff and CO₂, the ratio is 7×10⁻⁴ g·g⁻¹, after mixing the flowing supercritical carbon dioxide fluid with an initial temperature of 85 °C and the molten dye, the supercritical carbon dioxide fluid with the dye dissolved in it is cooled with liquid nitrogen at 15 °C/min. The cooling rate is reduced to the initial temperature (i.e. 85 °C), and the mixing and cooling process is repeated cyclically. This process is maintained for 10 minutes. During the repeated cycle, all temperature conditions remain the same as before; in the supercritical carbon dioxide fluid and dyeing during the entire process of material mixing, the pressure of the supercritical carbon dioxide fluid is always maintained at 20 MPa, and the flow rate of the supercritical carbon dioxide fluid is 70 tons/hour;

Test the solubility and dissolution rate of the dyestuff in the supercritical carbon dioxide fluid under the process parameter, and the test results are shown in Table 1.

### Example 10

A method for improving a solubility and a dissolution rate of dyestuffs in supercritical carbon dioxide fluid, using electric heating and a heating rate of 12 °C/min, to raise the temperature of the dyestuff (Food Yellow 10) with a melting point of 104 °C to the target temperature above the melting point (i.e. 115 °C) causes the dyestuff to melt. According to the mass ratio of the dyestuff to CO₂, the ratio is 4×10⁻⁴ g.g-1, after mixing the flowing supercritical carbon dioxide fluid with an initial temperature of 70 °C and the molten dye , the supercritical carbon dioxide fluid with the dye dissolved in it is cooled with water at 10 °C/min cooling rate to the initial temperature (i.e. 70 °C), and the mixing and cooling process is repeated in a cycle. This process is maintained for 15 minutes. During the cycle repetition process, all temperature conditions remain the same as before; in the supercritical carbon dioxide fluid and dyestuffs during the entire mixing process, the pressure of the supercritical carbon dioxide fluid is always maintained at 16 MPa, and the flow rate of the supercritical carbon dioxide fluid is 35 tons/hour;

Test the solubility and dissolution rate of the dyestuff in the supercritical carbon dioxide fluid under the process parameter, and the test results are shown in Table 1.

### Example 11

A method for improving a solubility and a dissolution rate of dyestuffs in supercritical carbon dioxide fluid, using infrared heating and a heating rate of 14 °C/min, to raise the temperature of the dyestuff (Food Orange 3) with a melting point of 160 °C to the target temperature above the melting point (i.e. 165 °C) makes the dyestuff melt. According to the mass ratio of the dyestuff to CO₂, the ratio is 7×10⁻⁵ g.g-1, after mixing the flowing supercritical carbon dioxide fluid with an initial temperature of 125 °C and the molten dye, the supercritical carbon dioxide fluid with the dye dissolved in it is cooled by air cooling at 8 °C/min. The cooling rate is reduced to the initial temperature (i.e. 125 °C), and the mixing and cooling process is repeated cyclically. This process is maintained for 100 minutes. During the repeated cycle, all temperature conditions remain the same as before; in the supercritical carbon dioxide fluid and dyeing during the entire process of material mixing, the pressure of the supercritical carbon dioxide fluid is always maintained at 19 MPa, and the flow rate of the supercritical carbon dioxide fluid is 75 tons/hour;

Test the solubility and dissolution rate of the dyestuff in the supercritical carbon dioxide fluid under the process parameter, and the test results are shown in Table 1.

### Example 12

A method for improving a solubility and a dissolution rate of dyestuffs in supercritical carbon dioxide fluid, using nitrogen heating and a heating rate of 20 °C/min, to raise the temperature of the dyestuff (Pigment Yellow 5) with a melting point of 206 °C to the target temperature above the melting point (i.e. 210 °C) makes the dyestuff melt. According to the mass ratio of the dyestuff to CO₂, the ratio is 6×10⁻⁵ g.g-1, after mixing the flowing supercritical carbon dioxide fluid with an initial temperature of 140 °C and the molten dye, the supercritical carbon dioxide fluid with the dye dissolved in it is cooled with liquid nitrogen at 18 °C/min. The cooling rate is reduced to the initial temperature (i.e. 140 °C), and the mixing and cooling process is repeated cyclically. This process is maintained for 110 minutes. During the repeated cycle, all temperature conditions remain the same as before; in the supercritical carbon dioxide fluid and dyeing during the entire process of material mixing, the pressure of the supercritical carbon dioxide fluid is always maintained at 25 MPa, and the flow rate of the supercritical carbon dioxide fluid is 100 tons/hour;

Test the solubility and dissolution rate of the dyestuff in the supercritical carbon dioxide fluid under the process parameter, and the test results are shown in Table 1.

### Example 13

A method for improving a solubility and a dissolution rate of dyestuffs in supercritical carbon dioxide fluid, using infrared heating and a heating rate of 14 °C/min, to raise the temperature of the dyestuff (Pigment Red 50) with a melting point of 176 °C to the target temperature above the melting point (i.e. 185 °C) makes the dyestuff melt. According to the mass ratio of the dyestuff to CO₂, the ratio is 8×10⁻⁵ g.g-1, after mixing the flowing supercritical carbon dioxide fluid with an initial temperature of 132 °C and the molten dye, the supercritical carbon dioxide fluid with the dye dissolved in it is cooled with water at 5 °C/min. The cooling rate is reduced to the initial temperature (i.e. 132 °C), and the mixing and cooling process is repeated cyclically. This process is maintained for 90 minutes. During the repeated cycle, all temperature conditions remain the same as before; in the supercritical carbon dioxide fluid and dyeing during the entire process of material mixing, the pressure of the supercritical carbon dioxide fluid is always maintained at 22 MPa, and the flow rate of the supercritical carbon dioxide fluid is 80 tons/hour;

Test the solubility and dissolution rate of the dyestuff in the supercritical carbon dioxide fluid under the process parameter, and the test results are shown in Table 1.

### Example 14

A method for improving a solubility and a dissolution rate of dyestuffs in supercritical carbon dioxide fluid, using water bath heating and a heating rate of 10 °C/min to raise the temperature of the dyestuff (Pigment Red 147) with a melting point of 210 °C to the target temperature above the melting point (i.e. 215 °C) makes the dyestuff melt. According to the mass ratio of the dyestuff to CO₂, the ratio is 6×10⁻⁵ g.g-1, after mixing the flowing supercritical carbon dioxide fluid with an initial temperature of 138 °C and the molten dye, the supercritical carbon dioxide fluid with the dye dissolved in it is cooled by air cooling at 12 °C/min. The cooling rate is reduced to the initial temperature (i.e. 138 °C), and the mixing and cooling process is repeated cyclically. This process is maintained for 120 minutes. During the repeated cycle, all temperature conditions remain the same as before; in the supercritical carbon dioxide fluid and dyeing during the entire process of material mixing, the pressure of the supercritical carbon dioxide fluid is always maintained at 27 MPa, and the flow rate of the supercritical carbon dioxide fluid is 120 tons/hour;

Test the solubility and dissolution rate of the dyestuff in the supercritical carbon dioxide fluid under the process parameter, and the test results are shown in Table 1.

### Example 15

A method for improving a solubility and a dissolution rate of dyestuffs in supercritical carbon dioxide fluid, using thermal oil heating and a heating rate of 12 °C/min, to raise the temperature of the dyestuff (Curcumin) with a melting point of 180 °C to the target temperature above the melting point (i.e. 180 °C) makes the dyestuff melt. According to the mass ratio of the dyestuff to CO₂, the ratio is 7.5×10⁻⁵ g·g⁻¹, after mixing the flowing supercritical carbon dioxide fluid with an initial temperature of 135 °C and the molten dye, the supercritical carbon dioxide fluid with the dye dissolved in it is cooled with water at 10 °C /min. The cooling rate is to the initial temperature (i.e. 135 °C), and the mixing and cooling process is repeated in a cycle. This process is maintained for 90 minutes. During the cycle repetition process, all temperature conditions remain the same as before; in the supercritical carbon dioxide fluid and dyestuffs during the entire mixing process, the pressure of the supercritical carbon dioxide fluid is always maintained at 20 MPa, and the flow rate of the supercritical carbon dioxide fluid is 80 tons/hour;

Test the solubility and dissolution rate of the dyestuff in the supercritical carbon dioxide fluid under the process parameter, and the test results are shown in Table 1.

### Example 16

A method for improving a solubility and a dissolution rate of dyestuffs in supercritical carbon dioxide fluid, using infrared heating and a heating rate of 14 °C/min, to raise the temperature of the dyestuff (Cochineal) with a melting point of 136 °C to the target temperature above the melting point (i.e. 140 °C) makes the dyestuff melt. According to the mass ratio of the dyestuff to CO₂, the ratio is 1.5×10⁻⁴ g·g⁻¹, after mixing the flowing supercritical carbon dioxide fluid with an initial temperature of 100 °C and the molten dye, the supercritical carbon dioxide fluid with the dye dissolved in it is naturally cooled to 5 °C/min. The cooling rate is to the initial temperature (i.e. 100 °C), and the mixing and cooling process is repeated in a cycle. This process is maintained for 30 minutes. During the cycle repetition process, all temperature conditions remain the same as before; in the supercritical carbon dioxide fluid and dyestuffs during the entire mixing process, the pressure of the supercritical carbon dioxide fluid is always maintained at 15 MPa, and the flow rate of the supercritical carbon dioxide fluid is 40 tons/hour;

Test the solubility and dissolution rate of the dyestuff in the supercritical carbon dioxide fluid under the process parameter, and the test results are shown in Table 1.

### Example 17

A method for improving a solubility and a dissolution rate of dyestuffs in supercritical carbon dioxide fluid, using microwave heating and a heating rate of 16 °C/min, to raise the temperature of the dyestuff (Rutin) with a melting point of 195°C to the target temperature above the melting point (i.e. 200 °C) allows the dyestuff to melt. According to the mass ratio of the dyestuff to CO₂, the ratio is 6.5×10⁻⁵ g·g⁻¹, after mixing the flowing supercritical carbon dioxide fluid with an initial temperature of 140 °C and the molten dye, the supercritical carbon dioxide fluid with the dye dissolved in it is cooled with liquid nitrogen at 16 °C/min. The cooling rate is reduced to the initial temperature (i.e. 140 °C), and the mixing and cooling process is repeated cyclically. This process is maintained for 100 minutes. During the repeated cycle, all temperature conditions remain the same as before; in the supercritical carbon dioxide fluid and dyeing during the entire process of material mixing, the pressure of the supercritical carbon dioxide fluid is always maintained at 22 MPa, and the flow rate of the supercritical carbon dioxide fluid is 100 tons/hour;

Test the solubility and dissolution rate of the dyestuff in the supercritical carbon dioxide fluid under the process parameter, and the test results are shown in Table 1.

### Example 18

A method for improving a solubility and a dissolution rate of dyestuffs in supercritical carbon dioxide fluid, using electric heating and a heating rate of 15 °C/min, to raise the temperature of the dyestuff (Ferulic Acid) with a melting point of 170 °C to the target temperature above the melting point (i.e. 180 °C) causes the dyestuff to melt. According to the mass ratio of the dyestuff to CO₂, the ratio is 3.5×10⁻⁴ g·g⁻¹, after mixing the flowing supercritical carbon dioxide fluid with an initial temperature of 120 °C and the molten dye, the supercritical carbon dioxide fluid with the dye dissolved in it is cooled with water at 15 °C/min. The cooling rate is to the initial temperature (i.e. 120 °C), and the mixing and cooling process is repeated in a cycle. This process is maintained for 30 minutes. During the cycle repetition process, all temperature conditions remain the same as before; in the supercritical carbon dioxide fluid and dyestuffs during the entire mixing process, the pressure of the supercritical carbon dioxide fluid is always maintained at 18 MPa, and the flow rate of the supercritical carbon dioxide fluid is 60 tons/hour;

Test the solubility and dissolution rate of the dyestuff in the supercritical carbon dioxide fluid under the process parameter, and the test results are shown in Table 1.

### Example 19

A method for improving a solubility and a dissolution rate of dyestuffs in supercritical carbon dioxide fluid, using microwave heating and a heating rate of 10 °C/min, to raise the temperature of the dyestuff (Dopamine) with a melting point of 218 °C to a target temperature above the melting point (i.e. 220 °C) makes the dyestuff melt. According to the mass ratio of the dyestuff and CO₂, the ratio is 9×10⁻⁵ g·g⁻¹, after mixing the flowing supercritical carbon dioxide fluid with an initial temperature of 130 °C and the molten dye, the supercritical carbon dioxide fluid with the dye dissolved in it is cooled by air cooling at 18 °C/min. The cooling rate is reduced to the initial temperature (i.e. 130 °C), and the mixing and cooling process is repeated cyclically. This process is maintained for 40 minutes. During the repeated cycle, all temperature conditions remain the same as before; in the supercritical carbon dioxide fluid and dyeing during the entire process of material mixing, the pressure of the supercritical carbon dioxide fluid is always maintained at 20 MPa, and the flow rate of the supercritical carbon dioxide fluid is 100 tons/hour;

Test the solubility and dissolution rate of the dyestuff in the supercritical carbon dioxide fluid under the process parameter, and the test results are shown in Table 1.

### Example 20

A method for improving a solubility and a dissolution rate of dyestuffs in supercritical carbon dioxide fluid, using nitrogen heating and a heating rate of 18 °C/min, to raise the temperature of the dyestuff (Klein 5060 Flame Retardant Finishing Agent) with a melting point of 233 °C to a target temperature above the melting point (i.e. 240 °C) to melt the dyestuff. According to the mass ratio of the dyestuff to CO₂, the ratio is 5.5×10⁻⁵ g·g^{-1,} after mixing the flowing supercritical carbon dioxide fluid with an initial temperature of 135 °C and the molten dye, the supercritical carbon dioxide fluid with the dye dissolved in it is cooled with liquid nitrogen for 20 °C/min. The cooling rate is reduced to the initial temperature (i.e. 135 °C), and the mixing and cooling process is repeated cyclically. This process is maintained for 60 minutes. During the repeated cycle, all temperature conditions remain the same as before; in the supercritical carbon dioxide fluid and dyeing during the entire process of material mixing, the pressure of the supercritical carbon dioxide fluid is always maintained at 18 MPa, and the flow rate of the supercritical carbon dioxide fluid is 120 tons/hour;

Test the solubility and dissolution rate of the dyestuff in the supercritical carbon dioxide fluid under the process parameter, and the test results are shown in Table 1.

### Example 21

A method for improving a solubility and a dissolution rate of dyestuffs in supercritical carbon dioxide fluid, using water bath heating and a heating rate of 5 °C/min, to raise the temperature of the dyestuff (DOPO Flame Retardant Finishing Agent) with a melting point of 119 °C to a target temperature above the melting point (i.e. 120 °C), so that the dyestuff melts. According to the mass ratio of the dyestuff and CO₂, the ratio is 8.5×10⁻⁴ g.g-1, after mixing the flowing supercritical carbon dioxide fluid with an initial temperature of 100 °C and the molten dye, the supercritical carbon dioxide fluid with the dye dissolved in it is naturally cooled to 5 °C /min cooling rate to the initial temperature (i.e. 100 °C), and the mixing and cooling process is repeated in a cycle. This process is maintained for 10 minutes. During the cycle repetition process, all temperature conditions remain the same as before; in the supercritical carbon dioxide fluid and dyestuffs during the entire mixing process, the pressure of the supercritical carbon dioxide fluid is always maintained at 16 MPa, and the flow rate of the supercritical carbon dioxide fluid is 30 tons/hour;

Test the solubility and dissolution rate of the dyestuff in the supercritical carbon dioxide fluid under the process parameter, and the test results are shown in Table 1.

**Table 1**

| Example number | Solubility of dyestuff in supercritical carbon dioxide fluid (mol/mol) | Dissolution rate of dyestuff in supercritical carbon dioxide fluid (mol/(mol·min)) |
|---|---|---|
| Example 1 | 5.7×10⁻⁵ | 2.8×10⁻⁶ |
| Example 2 | 2.8×10⁻⁵ | 1.2×10⁻⁶ |
| Example 3 | 1.6×10⁻⁴ | 1.2×10⁻⁵ |
| Example 4 | 6.2×10⁻⁴ | 7.8×10⁻⁵ |
| Example 5 | 4.9×10⁻⁴ | 3.3×10⁻⁵ |
| Example 6 | 7.3×10⁻⁴ | 9.1×10⁻⁵ |
| Example 7 | 8.2×10⁻⁴ | 7.5×10⁻⁵ |
| Example 8 | 7.7×10⁻⁵ | 3.7×10⁻⁶ |
| Example 9 | 8.9×10⁻⁴ | 8.2×10⁻⁵ |
| Example 10 | 1.5×10⁻³ | 3.1×10⁻⁴ |
| Example 11 | 9.8×10⁻⁵ | 7.0×10⁻⁶ |
| Example 12 | 1.8×10⁻⁵ | 8.1×10⁻⁷ |
| Example 13 | 5.4×10⁻⁵ | 3.0×10⁻⁶ |
| Example 14 | 9.8×10⁻⁶ | 3.9×10⁻⁷ |
| Example 15 | 3.8×10⁻⁵ | 1.7×10⁻⁶ |
| Example 16 | 5.1×10⁻⁴ | 3.2×10⁻⁵ |
| Example 17 | 1.7×10⁻⁵ | 7.8×10⁻⁷ |
| Example 18 | 8.4×10⁻⁵ | 7.2×10⁻⁶ |
| Example 19 | 9.2×10⁻⁵ | 6.1×10⁻⁶ |
| Example 20 | 7.5×10⁻⁵ | 4.7×10⁻⁶ |
| Example 21 | 2.8×10⁻⁴ | 5.6×10⁻⁵ |
| Comparison 1 | 8.8×10⁻⁷ | 2.5×10⁻⁸ |
| Comparison 2 | 9.4×10⁻⁶ | 4.3×10⁻⁷ |
| Comparison 3 | 4.9×10⁻⁶ | 1.7×10⁻⁷ |
| Comparison 4 | 5.3×10⁻⁶ | 2.1×10⁻⁷ |

Comparing Comparison 1 and Example 1, it can be seen that the solubility and dissolution rate in Example 1 are greatly improved compared to Comparison 1. This is because the method in Example 1 destroys the Dispersion Yellow 163, the internal intermolecular interaction makes it easier for the dye to dissolve in the supercritical CO₂ fluid, resulting in increased solubility, and the melting of the Dispersed Yellow 163 dye increases its contact area with the supercritical CO₂ fluid, resulting in dissolution speed increase;

Comparison 2 and Example 1, it can be seen that the solubility and dissolution rate in Example 1 are significantly improved compared to Comparison 2. This is because: compared with the post-mixing temperature in Example 1 (between 130 °C and 190 °C, significantly lower than 190 °C). After the disperse dye at 182 °C in Comparison 2 is mixed with the supercritical CO₂ fluid, the fluid temperature is higher. Under this high temperature condition, the density of the supercritical CO₂ fluid decreases, and its ability to dissolve Disperse Yellow 163 becomes worse. Therefore, even if the dye melts, the solubility and dissolution rate are still low.

Comparison 3 and Example 1, it can be seen that the solubility and dissolution rate in Example 1 are significantly improved compared to Comparison 3. This is because the pressure decrease during the mixing process will lead to supercritical CO₂. The density of the fluid decreases and the dissolving ability of Disperse Yellow 163 becomes worse. Therefore, even if the dye melts, the solubility and dissolution rate are still low.

Comparison 4 and Example 1, it can be seen that the solubility and dissolution rate in Example 1 are significantly improved compared to Comparison 4. This is because the pressure decrease during the cooling process will lead to supercritical CO₂. The density of the fluid decreases, and the dissolving ability of Disperse Yellow 163 becomes worse. The dissolved dye will precipitate, so the solubility and dissolution rate are still low.

## Claims

1. A method for improving a solubility and a dissolution rate of dyestuffs in supercritical carbon dioxide fluid, comprising that, increasing a temperature to a target temperature above a melting point of a dyestuff to melt the dyestuff, mixing the supercritical carbon dioxide fluid in flow with the molten dyestuff at a certain mass ratio, and then lowering the supercritical carbon dioxide fluid with the dyestuff dissolved to an initial temperature, repeating mixing and cooling processes in a cycle and maintaining for a certain time, and all temperature conditions remaining the same as before during the cycle repetition;
wherein the dyestuff is a dye and/or a functional auxiliary;
wherein the initial temperature is lower than the target temperature;
wherein a pressure of the supercritical carbon dioxide fluid remains consistent.

2. The method of claim 1, comprising that, assuming the melting point of the dyestuff is A °C, and a value range of A is 60-230.

3. The method of claim 2, wherein the target temperature is A °C - (A+ 20) °C.

4. The method of claim 3, wherein the initial temperature of the supercritical carbon dioxide fluid is B °C, and a value range of B is 31.2< B< (A-20).

5. The method of claim 4, wherein the mass ratio of the dyestuff and the supercritical carbon dioxide fluid is 5×10-5-5×10-3 g·g-1.

6. The method of claim 1, wherein a rate of increasing the temperature is 1-20 °C/min.

7. The method of claim 1, wherein a flow rate of the supercritical carbon dioxide fluid is 1-120 ton/hour.

8. The method of claim 1, wherein the pressure of the supercritical carbon dioxide fluid is greater than 10 MPa.

9. The method of claim 1, wherein the certain time for maintaining is 5 min-2 h.

10. The method of claim 1, wherein a rate of cooling the temperature is 1-20 °C/min.

11. The method of claim 1, wherein the functional auxiliary agent is an antioxidant or a flame retardant finishing agent.

12. The method of claim 1, wherein the dye is a non-ionic dye.

13. The method of claim 12, wherein the non-ionic dye is more than one selected from the group consisting of a disperse dye, a disperse reactive dye, a solvent dye, a non-ionic food dye, an organic pigment and a natural dye.
